# EUROPÄISCHE PATENTSCHRIFT

(11) **EP 1 072 139 B1**
(45) Veröffentlichungstag und Bekanntmachung des Hinweises auf die Patenterteilung: **30.01.2002**
(21) Anmeldenummer: 98913492.9
(22) Anmeldetag: 17.04.1998
(51) Int. Cl.: H04L 29/06

(54) **DATENVERBREITUNGSSYSTEM UND DATENVERBREITUNGSVERFAHREN**
DATA DISTRIBUTION SYSTEM AND A DATA DISTRIBUTION METHOD
SYSTEME DE DIFFUSION DE DONNEES ET PROCEDE POUR DIFFUSER DES DONNEES

(43) Veröffentlichungstag der Anmeldung: 31.01.2001
(73) Patentinhaber: Swisscom Mobile AG, 3050 Bern (CH)
(72) Erfinder: HEUTSCHI, Walter, CH-3303 Jegensdorf (CH); RITTER, Rudolf, CH-3052 Zollikofen (CH); BOUQUET, Hanspeter, CH-3032 Hinterkappelen (CH)
(74) Vertreter: BOVARD AG - Patentanwälte
(86) Internationale Anmeldenummer: CH9800148
(87) Internationale Veröffentlichungsnummer: WO9955050

(56) Entgegenhaltungen:
- WO-A-96/25006
- WO-A-98/03928
- US-A- 5 592 626

## Beschreibung

Die vorliegende Erfindung betrifft ein Verfahren und ein System, um Daten an Benutzer durch eine Vielzahl von adressierten Broadcastkanälen zu verbreiten.

Daten aus einem oder mehreren Servern in einem Telekommunikationsnetz, insbesondere Multimediadaten, werden im Stand der Technik entweder im « pull mode » oder im « push mode » an die Benutzer übertragen. Im « pull mode » bleiben die Daten im Server gespeichert, bis sie ein Benutzer über ein Telekommunikationsnetz in ein Terminal herunterlädt. Diese Übertragungsart erfordert somit die aktive Teilnahme des Benutzers, der selber die benötigten Daten recherchieren muss und entscheidet, weiche Informationen er empfangen möchte.

Diese aktive Suche ist allerdings nur möglich, wenn die Daten über ein bidirektionales Telekommunikationsnetz, zum Beispiel über das öffentliche Telefonnetz, übertragen werden. Ferner ist ein Mindestmass an Informatikkenntnissen und ein nicht unbeträchtlicher Zeitaufwand erforderlich, um relevante Daten zu finden.

Im « push mode » (Broadcasting) werden die Daten gleichzeitig von einem Server an alle Benutzerterminals ausgesandt, die diese passiv empfangen. Diese Daten können, je nach Kanaltyp, entweder im Terminal des Benutzers gefiltert und zwischengespeichert oder sofort angezeigt oder wiedergegeben werden. Die meisten Broadcastsysteme sind rein monodirektional und weisen daher keinen Rückkanal auf, mit dem der Benutzer dem Sender antworten könnte. Das ist zum Beispiel der Fall in den üblichen Radio- und Fernsehbroadcastsystemen. Wenn der Empfänger, zum Beispiel der Radiozuhörer oder der Fernsehzuschauer, auf eine Sendung oder auf eine Werbung reagieren möchte, muss er daher auf ein anderes Telekommunikationssystem zugreifen, zum Beispiel auf sein Telefon. Dieses Verfahren ist äusserst umständlich und fehleranfällig. Die üblichen Broadcastsysteme sind daher nur bedingt geeignet, um Benutzer zu Spontaneinkäufen während oder gleich nach einer Werbung zu bewegen. Als digitale Broadcastkanäle kann man beispielsweise das Teletext- und das DAB-System (Digital Audio Broadcasting) erwähnen.

In der letzten Zeit sind bidirektionale Pushkanäle entstanden, die einen zusätzlichen Rückkanal aufweisen. Insbesondere werden Multimediadaten immer häufiger über das Internet im « push mode » übertragen. Die Benutzer können in diesem Fall mit E-Mail den Informationsanbietem antworten.

Bei den üblichen Pushsystemen wird das gleiche gesamte Programm von einem oder mehreren Server an alle Benutzer übermittelt. Jedes Benutzerterminal umfasst in diesem Fall einen Filter, mit dem nur diejenigen Daten, die den Benutzer interessieren, gespeichert oder angezeigt werden. Beispielsweise wird ein komplettes Informationsprogramm an einen Empfänger übertragen, der entscheidet, nur die Informationen über Sport oder Politik zu speichern oder anzuzeigen. Die Benutzung der Bandbreite des Kanals ist daher nicht optimal : Daten werden auch an Benutzer übertragen, die sich dafür nicht interessieren. Ausserdem müssen die Benutzer warten, bis die für sie interessanten Informationen ausgesandt werden.

Die üblichen Datenverbreitungssysteme sind von einem bestimmten Verbreitungskanal abhängig. Der Benutzer muss daher mit einem geeigneten Endgerät ausgerüstet sein, um auf die Informationen von einem bestimmten Informationsanbieter zugreifen zu können. Der Benutzer hat aber im allgemeinen nicht die Möglichkeit, ein Endgerät eines beliebigen Typs auszuwählen, um auf die Daten eines bestimmten informationsanbieters zuzugreifen. Umgekehrt kann der Informationsanbieter seine Informationssammlung nicht leicht durch verschiedene Verbreitungskanäle verbreiten.

In der Patentschrift US 5 592 626 wird ein Netzwerksystem für die Übermittlung von Multimedia-Programmen an eine Vielzahl von Benutzer beschrieben, wobei die Übermittlung zu von den Benutzern im voraus spezifizierten Zeitpunkten erfolgt. Gemäss der Lehre von US 5 592 626 werden die von den Benutzern spezifizierten Übermittlungszeiten durch einen Scheduler entgegengenommen, der jeweils einen Netzwerk-Server-Pfad bestimmt, über den ein von einem betreffenden Benutzer gewähltes Multimedia-Programm effizient und zum spezifizierten Zeitpunkt an den betreffenden Benutzer übermittelt wird, wobei die Netzwerk-Server die Multimedia-Programme empfangen, in einem Cache-Speicher zwischenspeichern und direkt an einen betreffenden Benutzer oder an einen weiteren Netzwerk-Server weiterleiten.

In der Patentanmeldung WO 98/03928 wird ein Web-Server-System beschrieben, welches digitale Dokumente, beispielsweise E-Mail-Meldungen oder Fax-Nachrichten, von entsprechenden Endgeräten entgegennimmt, die entgegengenommenen digitalen Dokumente in Dokumente vom HTML-Format (Hyper Text Markup Language) konvertiert und die HTML-Dokumente in einer Datenbank speichert, welche von Benutzern über das Internet eingesehen werden kann, wobei die HTML-Dokumente über das Internet an die Benutzer übertragen werden.

Es ist daher ein Ziel der vorliegenden Erfindung, ein Datenverbreitungssystem anzubieten, das diese Nachteile vermeidet.

Erfindungsgemäss wird dieses Ziel mit Hilfe eines Verfahrens und eines Systems erreicht, die die Merkmale der entsprechenden unabhängigen Ansprüche aufweisen, wobei bevorzugte Ausführungsformen in den Nebenansprüchen angeführt sind.

Die Erfindung wird mit Hilfe der als Beispiel angeführten und in den Figuren dargestellten Beschreibung besser verständlich, wobei:

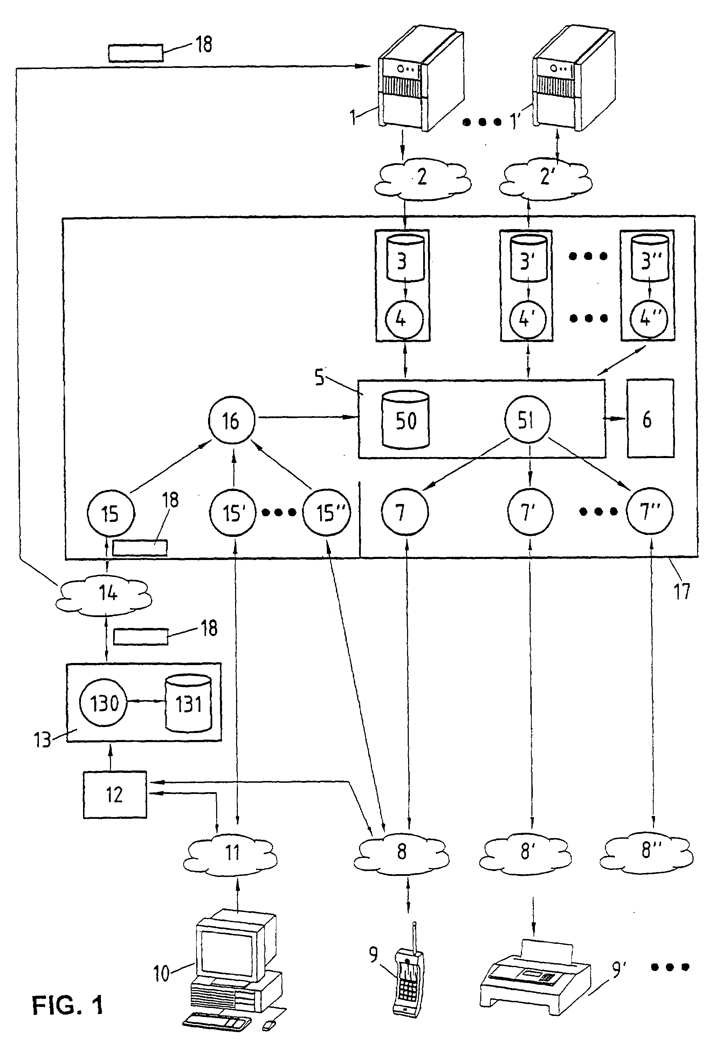

Die Figur 1 eine schematische Ansicht des erfindungsgemässen Systems darstellt, und
Die Figur 2 das Format eines Auftragscodes zeigt.

Mit 1, 1', .. sind verschiedene Server von verschiedenen Informationsanbietern dargestellt. Die Rolle des Informationsanbieters kann beispielsweise eine Presseagentur, ein Börseninstitut, ein Wetterdienst, eine Zeitung, eine Firma, ein Produktlieferant, usw. erfüllen. Diese Anbieter verfügen über einen oder mehrere Server 1' 1', .. von verschiedenen Typen, in welchen zur Verfügung gestellte Informationen gemäss unterschiedlichen Abspeicherungsstandards abgelegt sind. Das Datenverbreitungssystem 17 der vorliegenden Erfindung kann auf diese Daten durch ein oder mehrere Netzwerke 2, 2',.. zugreifen, beispielsweise als FTP-Daten via Internet. Die Datenübertragung zwischen den Servern 1 und dem System 17 kann aber auch via andere Netzwerke erfolgen, zum Beispiel auch als Teletext-Seite, als DAB-, FM-Swift oder FM-DARC-Radioprogrammbegleitende Daten, durch einen Femseh- oder Radio-Kanal, per normale Post, im « push-mode » oder im « pull mode » usw.

Die empfangenen Daten werden dann im Datenverbreitungssystem 17 in den Informationsdatenbanken 3, 3', .. abgelegt. Das System 17 besteht vorzugsweise aus einer speziell programmierten Datenverarbeitungseinheit mit Anschluss an verschiedene Telekommunikationssysteme 2, 8. In diesem Beispiel ist eine Datenbank 3, 3', 3" pro Informationsanbieter vorgesehen; es wäre jedoch auch möglich, eine Datenbank vorzusehen, in der Daten aus mehreren oder allen Informationsanbietern 1, 1',.. abgelegt wären. Das System 17 kann auch eine Datenbank 3" oder einen Datenbankbereich enthalten, in welchem interne Informationen des Systembetreibers 17 abgelegt sind.

Je nach Informationsdienst 1 kann die entsprechende Datenbank 3 eine komplette Kopie der angebotenen Daten in strukturierter Form umfassen, beispielsweise eine komplette Kopie einer WEB-Site oder nur ein Link zu diesen Daten, oder in den meisten Fällen nur einen Auszug dieser Daten. In diesem Fall sind vorzugsweise nicht dargestellte Filtermittel vorgesehen, um nur die relevanten Daten aus einem Dienstanbieter auszusortieren. In einer Variante kann das System 17 Daten automatisch nach Benutzerkriterien in den verschiedenen Telekommunikationsnetzen 2, 2' bei verschiedenen Informationsanbietem recherchieren. Beispielsweise werden automatisch alle Informationen über eine Sportmannschaft oder über den Wert einer Aktie vom System 17 im Internet recherchiert, wenn mindestens ein Benutzer diese Daten bestellt hat. Verschiedene Suchmittel und Suchmaschinen können zu diesem Zweck angewendet werden; es können auch Such-Agenten (sogenannte Bots) zu diesem Zweck eingesetzt werden.

Die abgelegten Daten in den Datenbanken 3, 3',.. werden dann mit dem Informations-Dispatcher 5 an die Benutzer verbreitet. Der Informations-Dispatcher umfasst eine Datenbank 50, die Sendekriterien für die in den Datenbanken 3, 3', 3",.. abgelegten Informationen,.. enthält. Ein Modul 51 prüft die Sendekriterien und erzeugt entsprechende Sendepläne, um die Daten an die Benutzer zu verbreiten. Die Sendekriterien werden von den Benutzern selbst eingegeben und bestimmen, wann und nach welchen Kriterien welche Daten an welche Benutzer oder Benutzergruppen ausgesandt werden müssen.

Die Benutzer können beispielsweise mindestens folgende Sendekriterien definieren:
- Die Kategorie der gewünschten Information (zum Beispiel : « ich will alle Informationen über diese Sportmannschaft empfangen »).
- Optional einen speziellen Datendienst (zum Beispiel : « ich will alle Informationen vom Wetterdienst »).
- Aussendezeitkriterien (zum Beispiel : « diese Daten will ich heute Abend zwischen 19 und 21 Uhr empfangen »)
- Aussendeperiodizitätkriterien (zum Beispiel : « diese Daten will ich jeden Abend zwischen 19 und 21 Uhr empfangen »)
- Ereigniskriterien (zum Beispiel: « ich will sofort informiert werden, wenn eine Sportmannschaft ein Spiel gewinnt, oder wenn eine Aktie einen bestimmten Wert übersteigt)
- Ein Verbreitungskanal, über welchen diese Informationen übertragen werden müssen [zum Beispiel als E-Mail, als SMS-Meldung für ein Mobilfunkgerät, als Meldungen für ein Personenrufnetz (Pagernetz), als DAB-Daten, usw.]
- Die Gültigkeit (zum Beispiel zwischen Januar 1998 und Januar 1999).
- usw.

Diese Sendekriterien sind in der Datenbank 50 mit der Adresse des Benutzers verknüpft, an den die Daten übertragen werden müssen. Vorzugsweise kann auch eine Liste von Benutzeradressen eingegeben werden, beispielsweise eine Liste von allen Mitgliedern eines Vereins oder einer Firma, die bestimmte Daten empfangen sollen. Damit kann beispielsweise auch das Aussenden von Werbungen an alle Benutzer, oder an grössere Benutzergruppen, programmiert werden. Je nach Verbreitungskanal kann die Benutzeradresse anders formuliert werden ; im Falle einer SMS-Meldung entspricht sie beispielsweise der IMSI (international mobile subscriber identity) oder der MSISDN (Mobile subscriber identification number) des Benutzers, im Falle eines E-Mails eine E-Mail-Adresse, im Falle einer Postsendung eine normale Postadresse usw.

Vorzugsweise können auch Sendekriterien für vordefinierte Sets aus Daten und Informationen von verschiedenen Informationsanbietern definiert werden. Beispielsweise kann für einen besonderen Anlass, beispielsweise für eine Ausstellung oder ein kulturelles Ereignis, ein einziges Sendekriterium definiert werden, um Informationen von verschiedenen informationsanbietern betreffend diesen Anlass an alle Interessierten und an Besucher auszusenden, beispielsweise um ein aktualisiertes Ausstellungsprogramm, einen Fahrplan, Informationen über Parkplätze usw. an unterschiedliche Endgeräte 9, 9',.. auszusenden.

Der Informations-Dispatcher 5 generiert in Abhängigkeit der eingegebenen Sendekriterien einen Sendeplan für jeden Ausgangstreiber 7, 7', 7". Jeder Sendeplan umfasst eine Liste von Daten (oder von Links zu diesen Daten), die aus den Datenbanken 3, 3', 3".. gewonnen worden sind, sowie Sendekriterien und eine Benutzeradresse für diese Daten. Die Daten werden je nach Ausgangstreiber angepasst und formatiert. Die verschiedenen Sendepläne werden automatisch oder manuell mit Hilfe eines Operators generiert; auch im Fall eines automatisch generierten Sendeplans kann vorzugsweise ein Operator den erzeugten Sendeplan konsultieren, verwalten, beziehungsweise ändern.

Nicht alle Daten können durch alle zur Verfügung stehenden Kanäle ausgesandt werden. Multimediadaten können beispielsweise als E-mail ausgesandt werden, aber möglicherweise nicht als Meldung für jedes Personenrufgerät. Ausserdem ist die Bandbreite der verschiedenen Verbreitungskanäle, der Benutzer und der Informations-Dispatcher 5 nicht unbegrenzt, so dass bestimmte Daten möglicherweise nicht oder nicht zum verlangten Zeitpunkt übertragen werden können. Das Modul 51 führt daher Kontrollen aus, um diese Konflikte zu ermitteln und wenn möglich automatisch zu lösen, indem beispielsweise manche Daten in den Sendeplänen verzögert oder in einen anderen Sendeplan entsprechend einem anderen Kanal verschoben werden. Wenn das Modul 51 wegen bestimmten Daten einen Bandbreitenkonflikt nicht lösen kann, werden diese Daten nicht in den Sendeplan eingetragen, und der Benutzer wird, beispielsweise mit einem E-Mail durch einen freien Kanal, informiert.

Die folgenden Plausibilitätsprüfungen werden bei der Einführung von Daten in einen Sendeplan durchgeführt:
- Grösse der Daten: die Daten, die grösser als eine vordefinierte Grösse in Bytes sind, können nicht in einen Sendeplan eingeführt werden;
- maximale Auflösung im Falle eines Bildobjekts, welche die Auflösung des Endgeräts 9, 9', .. nicht überschreiten darf;
- Format der Daten, das kompatibel zum Endgerät sein muss.

Das Modul 51 versucht bei der Herstellung von Sendeplänen alle eingegebenen Sendekriterien aller Benutzer zu berücksichtigen. Diese Sendepläne werden dann von entsprechenden Ausgabetreibern 7, 7', 7" ausgeführt, um die selektierten Daten durch die verschiedenen Verbreitungskanäle auszusenden. Die Ausführung eines Sendeplans entspricht der Sendung der angegebenen Daten an den Benutzer oder an die Benutzergruppe, wenn die angegebenen Sendekriterien erfüllt sind, beispielsweise zum angegebenen Zeitpunkt oder für ein ereignisgesteuertes Sendekriterium, wenn ein externes Ereignis erkannt wird.

Vorzugsweise enthält das System 17 Ausgabetreiber, um die selektierten Daten in den folgenden Formaten durch alle oder mehrere der folgenden Kanäle aussenden zu können :
- Als digitale Meldungen an Mobilfunktelefone (9) durch ein zellulares Digital-Mobilfunknetz (8), oder als E-Mail an ein WAP-taugliches Mobilgerät (Wireless Application Protocol).
- Als Personenrufmeldungen durch ein Personenrufnetz (Pager).
- Als E-mail durch Internet, oder durch ein anderes Telekommunikationsnetz.
- Als Radioprogrammbegleitender Dienst in einem DAB-Radioprogramm (z.B. DAB, FM-Swift oder FM-DARC).
- Als Teletext-Seite in einem Teletextsystem.
- Als Fax durch ein ISDN-Netz oder durch das öffentliche Telefonnetz.
- Als Brief mit normaler Post.
- Als Bild auf Anzeigetafeln oder auf Bildschirmen.
- Als mündliche Meldung an ein Telefon, zum Beispiel mit einem Sprachsynthesizer,..
- usw.

Je nach Verbreitungskanal kann der Ausgabetreiber 7, 7', 7" ganz unterschiedliche Komponenten umfassen. Im Fall einer Übertragung als E-Mail, als Kurzmeldung durch ein Mobilfunknetz oder zum Beispiel als Fax, kann der Ausgabetreiber aus einem Modem und geeigneten Softwaremitteln bestehen ; im Fall einer Übertragung als Brief für die Post kann die Verbreitung auch manuelle Operationen umfassen, zum Beispiel um die Briefe zu erfassen und die Kuverts zu frankieren.

Die ausgesandten Daten werden über einen entsprechenden Kanal 8, 8', 8" an die angegebenen Benutzer übertragen und auf einem Endgerät 9, 9', .. empfangen, beispielsweise auf einem Mobilgerät, auf einem Faxgerät, als E-mail auf einem Rechner, usw. Die übertragenen Daten können einen einfachen Text-Inhalt oder auch einen Multimedia-Inhalt enthalten ; im letztgenannten Fall können die Daten zusätzlich oder statt Textmeldungen auch Multimedia Objekte enthalten, zum Beispiel Tondaten, unbewegte oder animierte Bilder usw.

Das System 17 umfasst vorzugsweise ein Verrechnungsmodul 6, um die Aussendung von Daten an die Benutzer zu verrechnen. Diese Verrechnung kann beispielsweise von der Menge der übertragenen Daten, von der Sendezeit, von der Anzahl von Sendekriterien, von der Menge oder der Art der angeforderten Information usw. abhängig sein. Vorzugsweise können sich Benutzer auch für bestimmte Standarddienste, zum Beispiel für tägliche Wettervorhersagen, abonnieren. Die Verrechnung kann beispielsweise per Rechnung, per Kreditkarte, mit der Telefonrechnung, per Belastung eines Konto beim Systembetreiber, usw. erfolgen. Vorzugsweise kann mindestens in manchen Fällen ein Teil des bezahlten Betrags an den Informationsanbieter 1 zurückbezahlt werden.

Die Benutzer können vorzugsweise durch verschiedene Kanäle auf die Datenbank 50 zugreifen, um die Sendekriterien zu verwalten. Zu diesem Zweck verfügt vorzugsweise das System 17 über verschiedene Eingangstreiber 15, 15', 15", usw. Ein Modul 16 steuert diese verschiedenen Treiber und bildet eine einheitliche Schnittstelle zum Informations-Dispatcher 5. Die Sendekriterien können beispielsweise via Internet (11) verwaltet werden; in diesem Fall umfasst der entsprechende Eingangstreiber vorzugsweise einen WEB-Server. Mit einem geeigneten Formular kann der Benutzer die benötigten Kriterien auf seinem Rechner 10 eingeben, wobei das Formular vorzugsweise einige Formal- und Kohärenz-Prüfungen schon ausführt. Vorzugsweise kann der Benutzer die Sendekriterien auch per Brief oder telefonisch bestimmen.

Der Benutzer kann Sendekriterien für sich selbst definieren. Optional kann er auch Sendekriterien für andere angegebene Benutzer oder Benutzergruppen eingeben, mit oder ohne Genehmigung dieser Benutzer. Beispielsweise kann eine Firma eine Liste von potentiellen Kunden eingeben, die eine bestimmte Werbung empfangen müssen; oder ein Ausstellungsorganisator kann auf diese Weise die für die Besucher relevanten Informationen an alle Interessierten oder an alle Ticketerwerber verbreiten lassen.

Vorzugsweise können die Sendekriterien in der Datenbank 50 auch mit speziellen Meldungen, zum Beispiel mit SMS oder USSD-Meldungen, die mit einem Mobilgerät 9 erfasst wurden, verwaltet werden. Diese Meldungen werden beispielsweise über ein GSM-Mobilfunknetz 8 und eine nicht dargestellte Kurzmeldungsdienstzentrale SSC übertragen.

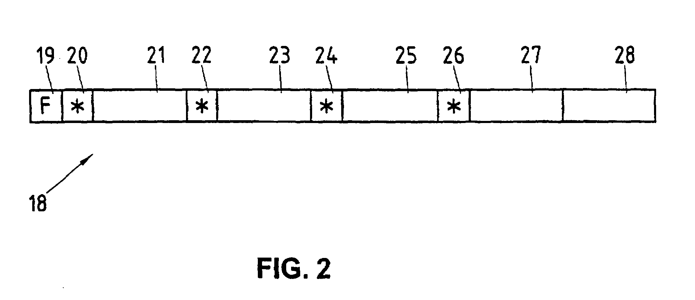

Erfindungsgemäss können die Sendekriterien auch mittels standardisierten Auftragscoden 18 eingegeben und verwaltet werden. Die Figur 2 zeigt als Beispiel einen solchen Auftragscode. Wie unten erklärt, ist das Format der Auftragscode fest definiert und erlaubt, ausser der Verwaltung von Sendekriterien, auch zum Beispiel die Bestellung von Produkten oder Dienstleistungen bei verschiedenen Lieferanten. Die Patentanmeldung WO 98/28900 beschreibt ein mögliches Format für Auftragscode. Auftragscode beinhalten mehrere Felder, deren Format standardisiert ist, und die mit den Bezugszeichen 19 bis 28 bezeichnet sind. Das Feld 19 enthält einen Header und zeigt an, dass es sich hier tatsächlich um einen Auftragscode handelt. Im einfachsten Fall umfasst der Header nur ein einziges ASCII-Symbol, in diesem Beispiel den Buchstaben F. Das zweite Feld 20 ist ein vordefinierter Feldbegrenzer, hier ein Stem, um andere Felder zu trennen. Das nächste Feld 21 enthält eine Identifizierung des Lieferanten: z.B. eine Abkürzung oder einen mnemotechnischen Code, der einen bestimmten Lieferanten eindeutig bezeichnet Für diese Anwendung enthält das Feld 21 eine Bezeichnung, die das Datenverbreitungssystem 17 eindeutig identifiziert. Diese Lieferantenidentifizierung kann beispielsweise eine Landesbezeichnung umfassen, die angibt, in welchem Land dieser Lieferant vorwiegend aktiv ist.

Das Feld 22 enthält einen zweiten Feldbegrenzer, in diesem Beispiel wieder das Symbol *. Das nächste Feld 23 umfasst eine Produktidentifizierung. Mit dieser vom Lieferanten ausgewählten Abkürzung oder Bezeichnung wird ein bestimmtes Produkt im Angebot dieses Lieferanten angegeben. In diesem Fall entspricht dieses Feld vorzugsweise einer Identifizierung des Sendekriterien-Verwaltungsdienstes. Dieses Feld ist mit einem dritten Feldbegrenzer 24 vom Feld 25 getrennt, das eine Checksumme enthält. Zusätzliche Felder 27, 28, getrennt vom Feld 25 mit einem zusätzlichen Feldbegrenzer 26, enthalten die eigentlichen Sendekriterien, wie oben definiert, sowie eine Identifizierung des Benutzers, oder eine Identifizierung des Endgeräts 9, auf dem die Daten empfangen werden sollen. Programmteile, zum Beispiel Applets in der Java-Sprache, oder in einer anderen objekt-orientierten Computersprache, können auch innerhalb der Felder 27,28 übertragen werden. Mit diesen Applets können zum Beispiel auch Menüs oder Listen für die Eingabe von zusätzlichen Parametern definiert werden.

Die Felder 19-28 können eine beliebige Kombination von alphanumerischen Symbolen enthalten. Jedes alphanumerische Symbol kann z.B. 46 verschiedene Werte annehmen - z.B. 26 Buchstaben, 10 Zahlen und 10 weitere verfügbare Symbole auf der Tastatur eines Mobilfunktelefons. Weitere Auswahlen von berechtigten Symbolen können natürlich definiert werden, z.B. dadurch, dass zwischen Gross- und Kleinbuchstaben unterschieden wird, Die Felder weisen eine variable Länge auf, die gesamte Länge des Auftragscodes kann jedoch z.B. auf 48 Zeichen beschränkt sein. Bei der einen Variante haben diese Felder eine vorbestimmte, fixe Länge: in diesem Fall sind die Feldbegrenzer nicht nötig und können weggelassen werden. Die Felder 27, 28 können als Variante auch binäre Daten enthalten, zum Beispiel Programmteile oder Objekte oder Verknüpfungen zu binären Daten.

Die Checksumme 25 ist durch irgendeinen bekannten Fehlerprüfungs- oder Fehlerkorrektur-Algorithmus aus den Feldern 21, 23, und eventuell 27, 28 festgelegt. Z.B. kann zum Festlegen des Wertes der Checksumme 25 ein Paritätskontrollalgorithmus verwendet werden. Die Anzahl der Zeichen der Checksumme hängt vom benützen Algorithmus und von der maximal akzeptierten Fehlerquote ab. Diese Checksumme wird vorzugsweise vom Lieferanten, hier vom Betreiber des Systems 17, ermittelt und muss vom Benutzer erfasst werden. Damit können Fehler bei der Eingabe oder bei der Übermittlung eines Auftragscodes festgestellt werden.

Um einen Auftragscode 18 zu editieren, wählt der Benutzer beispielsweise eine entsprechende Menüoption in einem geeigneten Programm, das vom Prozessor des Eingabeterminals 9, 10 ausgeführt wird. Als Variante kann der Benutzer beispielsweise auch eine entsprechende Internet-Seite konsultieren, oder eine geeignete Telefonnummer anwählen. In jedem Fall wird eine Eingabemaske auf dem Bildschirm des Eingabegeräts dargestellt, mit welchem er den gewünschten Auftragscode eingeben kann.

Die Felder 27, 28, die die eigentlichen Sendekriterien enthalten, werden vorzugsweise mit einem geeigneten Editierungsprogramm erfasst. Dieses Editierungsprogramm kann beispielsweise als Applet, zum Beispiel als JAVA-Applet, in den Terminal 9, 10 übertragen werden. Wenn ein neuer Auftragscode editiert wird, wird dieses Applet übertragen und ausgeführt, um die Eingabe der Sendekriterien und der Adresse in den Feldern 27, 28 zu erleichtern.

Beim Betätigen einer bestimmten Taste auf dem Endgerät 9, beispielsweise der Taste #, wird der ausgewählte Auftragscode von einer geeigneten Software in Kurzmeldungen verpackt, beispielsweise in SMS-Meldungen, in USSD-Dateien, oder als E-mail und durch das Mobilfunknetz 8 an eine Kurzmeldungsbetriebszentrale (SMSC) 12 des betreffenden Netzoperators übermittelt. Optional kann die Meldung zwischen dem Terminal 9 und der Zentrale 12 teilweise oder vollständig verschlüsselt werden. Die Zentrale 12 wird ausserdem mit einem Modul 13 verbunden, das seinerseits eine Benutzerdatenbank 131 umfasst, in welcher zusätzliche benutzerspezifische Parameter gespeichert sind. Die Benutzerdatenbank 131 entspricht beispielsweise der Abonnentendatenbank mit Angaben über alle Abonnenten beim Operator des Netzes 8, beispielsweise beim Operator eines Mobilfunknetzes. Der Benutzer wird beispielsweise mit Hilfe der im Header der empfangenen Kurzmeldung angegebenen Identifizierung, zum Beispiel mit der IMSI im Fall einer SMS-Kurzmeldung, in der Zentrale 12 identifiziert; diese Identifizierung wird dann als Eingabekriterium für die Benutzerdatenbank 131 benutzt, aus der damit zusätzliche benutzerspezifische Parameter gewonnen werden. Diese zusätzlichen Parameter umfassen beispielsweise die vollständige Adresse des Benutzers, seine Verrechnungsadresse, seine Zugriffsrechte, seine bevorzugte Sprache usw. Diese zusätzlichen Informationen werden dann von einem Modul 130 mit dem Inhalt der empfangenen Auftragscode verknüpft, und durch das Netz 14 an das Datenverbreitungssystem 17 weitergeleitet. Dieses System 17 erhält dann eine Meldung, die alle benötigte Sendekriterien sowie eine vollständige Identifizierung des Benutzers enthält. Diese Meldungen werden vorzugsweise von einem geeigneten Eingabetreiber 15 bearbeitet, der mit Hilfe des Moduls 16 die Sendekriterien prüft und gegebenenfalls in die Datenbank 50 ablegt.

Die Eingabe von Sendekriterien mit solchen Auftragscoden kann auch ein bidirektionales Gespräch umfassen. Wenn die Sendekriterien nicht vollständig sind, oder wenn die bestellten Daten zur gewünschten Zeit nicht ausgesandt werden können, kann in diesem Fall der Eingangstreiber 15 einen neuen Auftragscode verlangen oder selbst einen neuen Auftragscode vorschlagen.

Solche vordefinierten Auftragscode können vorzugsweise auch in den vom System 17 ausgesandten Daten enthalten sein. Beispielsweise kann eine übertragene Werbung oder sonstige Information einen solchen Auftragscode enthalten, den der Empfänger weiterleiten kann, wenn er zum Beispiel zusätzliche regelmässige oder punktuelle Informationen über ein bestimmtes Produkt oder Information erhalten möchte. Mit diesem Dienst kann der Benutzer beispielsweise auch die Wiederübermittlung einer Sendung bestellen.

Auftragscode können auch direkt an den Informationsanbieter 1 oder an Produkt- oder Dienstleistungs-Lieferanten übertragen werden. In diesem Fall muss das Feld 21 im Auftragscode eine Identifizierung dieses Lieferanten enthalten, um automatisch vom Modul 13 an diesen Lieferanten weitergeleitet zu werden. Vorzugsweise enthält das Feld 21 nur eine Abkürzung des Lieferantennamen, die vom Modul 13 mittels einer nicht dargestellten Lieferantendatenbank ergänzt wird, um eine Weiterleitung an den Lieferanten zu erlauben. Solche Auftragscode können zum Beispiel eine Produkt- oder Dienstleistungbestellung enthalten; damit kann der Benutzer beispielsweise Produkte oder Informationen über Produkte direkt beim Lieferanten 1 bestellen.

## Patentansprüche

1. Verfahren zur Verbreitung von adressierten Daten an eine Vielzahl von Benutzern (9), in welchem Verfahren mindestens eine Informationsdatenbank (3) erstellt wird, die Daten enthält, die dazu bestimmt sind, durch einen Verbreitungskanal ausgesandt zu werden, in welchem Verfahren Sendekriterien (50) gespeichert werden, wobei mindestens gewisse Sendekriterien eine Adresse eines Benutzers oder einer Benutzergruppe, sowie eine Angabe über die Daten aus der Informationsdatenbank (3, 3'), die an diesen Benutzer oder diese Benutzergruppe ausgesandt werden müssen, enthalten, und in welchem Verfahren die auszusendenden Daten gemäss den gespeicherten Sendekriterien automatisch selektiert werden, **dadurch gekennzeichnet,**
**dass** die abgelegten Daten aus einer Vielzahl von externen Informationsanbietern (1) gewonnen werden,
**dass** mit den Sendekriterien eine Angabe über mindestens einen aus verschiedenen Verbreitungskanälen ausgewählten Verbreitungskanal, über den die abgelegten Daten auszusenden sind, gespeichert wird, und
**dass** die automatisch selektierten Daten durch den ausgewählten Verbreitungskanal (8) an den angegebenen Benutzer (9) oder an die angegebene Benutzergruppe gesandt werden.

2. Verfahren gemäss dem vorhergehenden Anspruch, **dadurch gekennzeichnet, dass** mindestens gewisse selektierte Daten als Meldungen durch ein zellulares digitales Mobilfunknetz (8) ausgesandt werden.

3. Verfahren gemäss einem der vorhergehenden Ansprüche, **dadurch gekennzeichnet, dass** mindestens gewisse selektierte Daten als Meldungen für Personenrufsysteme ausgesandt werden.

4. Verfahren gemäss einem der vorhergehenden Ansprüche, **dadurch gekennzeichnet, dass** mindestens gewisse selektierte Daten als adressierte Meldungen, zum Beispiel als E-mail, durch lnternet ausgesandt werden.

5. Verfahren gemäss einem der vorhergehenden Ansprüche, **dadurch gekennzeichnet, dass** mindestens gewisse selektierte Daten als Teletextseite durch einen Teletext-Kanal ausgesandt werden.

6. Verfahren gemäss einem der vorhergehenden Ansprüche, **dadurch gekennzeichnet, dass** mindestens gewisse selektierte Daten als Fax durch ein öffentliches Telekommunikationsnetz ausgesandt werden.

7. Verfahren gemäss einem der vorhergehenden Ansprüche, **dadurch gekennzeichnet, dass** mindestens gewisse selektierte Daten auf Anzeigetafeln angezeigt werden.

8. Verfahren gemäss einem der vorhergehenden Ansprüche, **dadurch gekennzeichnet, dass** mindestens gewisse selektierte Daten Multimediadaten sind.

9. Verfahren gemäss einem der vorhergehenden Ansprüche, **dadurch gekennzeichnet, dass** mindestens gewisse der Benutzer Sendekriterien (50) durch mindestens ein Telekommunikationssystem (8, 14) verwalten.

10. Verfahren gemäss dem vorhergehenden Anspruch, **dadurch gekennzeichnet, dass** mindestens gewisse der Benutzer Sendekriterien (50) durch das Internet (11) verwalten.

11. Verfahren gemäss einem der Ansprüche 9 bis 10, **dadurch gekennzeichnet, dass** mindestens gewisse der Benutzer Sendekriterien (50) mit speziellen Meldungen durch ein Mobilfunknetz (8) verwalten.

12. Verfahren gemäss einem der Ansprüche 9 bis 11, **dadurch gekennzeichnet, dass** mindestens gewisse der Benutzer Sendekriterien (50) mit standardisierten Auftragscodes durch ein Mobilfunknetz (8) verwalten, wobei die Identität der Benutzer mit einer Benutzerdatenbank (131) im Mobilfunknetz automatisch ermittelt wird.

13. Verfahren gemäss einem der vorhergehenden Ansprüche, **dadurch gekennzeichnet, dass** die Sendekriterien mindestens eine Kategorie von gewünschten Informationen umfassen.

14. Verfahren gemäss einem der vorhergehenden Ansprüche, **dadurch gekennzeichnet, dass** mindestens gewisse der Sendekriterien mindestens einen Datendienst umfassen.

15. Verfahren gemäss einem der vorhergehenden Ansprüche, **dadurch gekennzeichnet, dass** mindestens gewisse der Sendekriterien ein standardisiertes Set aus verschiedenen Daten von verschiedenen Informationsanbietern (1) umfassen.

16. Verfahren gemäss einem der vorhergehenden Ansprüche, **dadurch gekennzeichnet, dass** mindestens gewisse der Sendekriterien Aussendezeitkriterien umfassen.

17. Verfahren gemäss einem der vorhergehenden Ansprüche, **dadurch gekennzeichnet, dass** mindestens gewisse der Sendekriterien Aussendeperiodizitätskriterien umfassen.

18. Verfahren gemäss einem der vorhergehenden Ansprüche, **dadurch gekennzeichnet, dass** mindestens gewisse der Sendekriterien Ereigniskriterien umfassen.

19. Verfahren gemäss einem der vorhergehenden Ansprüche, **dadurch gekennzeichnet, dass** mindestens gewisse der Sendekriterien bestimmte Daten angeben, die in der Informationsdatenbank (3) nur abgelegt werden, wenn mindestens ein Benutzer diese Daten ausgewählt hat.

20. Verfahren gemäss einem der vorhergehenden Ansprüche, **dadurch gekennzeichnet, dass** die Aussendung von Daten an den Benutzer mit einem Billingsystem verrechnet wird.

21. Datenverbreitungssystem (17) für die Verbreitung von. adressierten Daten an eine Vielzahl von Benutzer (9), welches Datenverbreitungssystem (17) mindestens eine Informationsdatenbank (3) enthält, in welcher Daten ablegbar sind, die dazu bestimmt sind, durch einen Verbreitungskanal (8) ausgesandt zu werden, welches Datenverbreitungssystem (17) einen Speicherbereich (50) enthält, in welchem Speicherbereich (50) Sendekriterien für jeden Benutzer (9) oder jede Benutzergruppe ablegbar sind, wobei mindestens gewisse Sendekriterien eine Adresse eines Benutzers oder einer Benutzergruppe, sowie eine Angabe über die Daten aus der Informationsdatenbank (3, 3'), die an diesen Benutzer oder diese Benutzergruppe ausgesandt werden müssen, enthalten, und welches Datenverbreitungssystem (17) einen Informationsdispatcher (5) zur automatischen Selektion von Daten aus der Informationsdatenbank (3, 3') umfasst, welche Daten die gewünschten Sendekriterien von mindestens einem Benutzer (9) erfüllen, **dadurch gekennzeichnet,**
**dass** das Datenverbreitungssystem (17) so eingerichtet ist, dass die ablegbaren Daten aus einer Vielzahl von Informationsanbietern (1) durch mindestens einen Kommunikationskanal (2) in die Informationsdatenbank (3, 3') übertragbar sind,
**dass** die Sendekriterien eine Angabe über mindestens einen aus verschiedenen Verbreitungskanälen (8, 8', 8") ausgewählten Verbreitungskanal (8) umfassen, über den die Daten aus der Informationsdatenbank (3, 3') auszusenden sind, und
**dass** das Datenverbreitungssystem (17) mindestens einen Ausgabetreiber (7) zur Aussendung der selektierten Daten durch den ausgewählten Verbreitungskanal (8) an die entsprechenden Benutzer (9) oder Benutzergruppe umfasst.

22. Datenverbreitungssystem gemäss dem vorhergehenden Anspruch, **dadurch gekennzeichnet, dass** es mehrere Ausgabetreiber (7) zur Aussendung von Daten an den Benutzer (9) durch eine entsprechende Vielzahl von Verbreitungskanälen (8) entsprechend den abgelegten Sendekriterien umfasst.

23. Datenverbreitungssystem gemäss einem der Ansprüche 21 oder 22, **dadurch gekennzeichnet, dass** die benannten Ausgabetreiber (7) mindestens einen Treiber für ein zellulares digitales Mobilfunknetz (8) umfassen, um selektierte Daten als Meldungen an Mobilfunktelefone (9) auszusenden.

24. Datenverbreitungssystem gemäss einem der Ansprüche 21 bis 23, **dadurch gekennzeichnet, dass** die benannten Ausgabetreiber (7) mindestens einen Treiber für ein Personenrufnetz umfassen, um selektierte Informationen als Personenrufmeldungen an Personenrufendgeräte auszusenden.

25. Datenverbreitungssystem gemäss einem der Ansprüche 21 bis 24, **dadurch gekennzeichnet, dass** die benannten Ausgabetreiber (7) mindestens einen Treiber für das Internet umfassen, um selektierte Informationen als E-mail auszusenden.

26. Datenverbreitungssystem gemäss einem der Ansprüche 21 bis 25, **dadurch gekennzeichnet, dass** die benannten Ausgabetreiber (7) mindestens einen Treiber für ein DAB-Netz umfassen, um selektierte Informationen als radioprogrammbegleitenden Dienst auszusenden.

27. Datenverbreitungssystem gemäss einem der Ansprüche 21 bis 26, **dadurch gekennzeichnet, dass** die benannten Ausgabetreiber (7) mindestens einen Treiber für ein Teletextsystem umfassen, um selektierte Informationen als Teletextseite auszusenden.

28. Datenverbreitungssystem gemäss einem der Ansprüche 21 bis 27, **dadurch gekennzeichnet, dass** die benannten Ausgabetreiber mindestens einen Fax-Treiber (7') umfassen, um selektierte Informationen als Fax auszusenden.

29. Datenverbreitungssystem gemäss einem der Ansprüche 21 bis 28, **dadurch gekennzeichnet, dass** die benannten Ausgabetreiber (7) mindestens einen Treiber für Anzeigetafeln umfassen, um selektierte Informationen auf Anzeigetafeln anzuzeigen.

30. Datenverbreitungssystem gemäss einem der Ansprüche 21 bis 29, **dadurch gekennzeichnet, dass** es so eingerichtet ist, dass die Sendekriterien in dem benannten Speicherbereich (50) durch die Benutzer durch mindestens ein Telekommunikationssystem (8, 14) verwaltbar sind.

31. Datenverbreitungssystem gemäss dem vorhergehenden Anspruch, **dadurch gekennzeichnet, dass** es so eingerichtet ist, dass die Sendekriterien in dem benannten Speicherbereich (50) durch die Benutzer mit Hilfe des Internets (11) verwaltbar sind.

32. Datenverbreitungssystem gemäss einem der Ansprüche 30 oder 31, **dadurch gekennzeichnet, dass** es so eingerichtet ist, dass die Sendekriterien in dem benannten Speicherbereich (50) durch die Benutzer mit speziellen Meldungen durch ein Mobilfunknetz (8) verwaltbar sind.

33. Datenverbreitungssystem gemäss einem der Ansprüche 31 bis 32, **dadurch gekennzeichnet, dass** es so eingerichtet ist, dass die Sendekriterien in dem benannten Speicherbereich (50) durch die Benutzer mit standardisierten Auftragscodes durch ein Mobilfunknetz (8) verwaltbar sind, wobei die Identität der Benutzer mit einer Benutzerdatenbank (131) im Mobilfunknetz automatisch ermittelt wird.

34. Datenverbreitungssystem gemäss einem der Ansprüche 21 bis 33, **dadurch gekennzeichnet, dass** die Sendekriterien (50) mindestens den Datentyp umfassen.

35. Datenverbreitungssystem gemäss einem der Ansprüche 21 bis 34, **dadurch gekennzeichnet, dass** mindestens gewisse der Sendekriterien (50) mindestens einen Datendienst angeben.

36. Datenverbreitungssystem gemäss einem der Ansprüche 21 bis 35, **dadurch gekennzeichnet, dass** mindestens gewisse der Sendekriterien ein standardisiertes Set aus verschiedenen Daten von verschiedenen Informationsanbietern (1) umfassen.

37. Datenverbreitungssystem gemäss einem der Ansprüche 21 bis 36, **dadurch gekennzeichnet, dass** mindestens gewisse der Sendekriterien Aussendezeitkriterien umfassen.

38. Datenverbreitungssystem gemäss einem der Ansprüche 21 bis 37, **dadurch gekennzeichnet, dass** mindestens gewisse der Sendekriterien Aussendeperiodizitätskriterien umfassen.

39. Datenverbreitungssystem gemäss einem der Ansprüche 21 bis 38, **dadurch gekennzeichnet, dass** mindestens gewisse der Sendekriterien Ereigniskriterien umfassen.

40. Datenverbreitungssystem gemäss einem der Ansprüche 21 bis 39, **dadurch gekennzeichnet, dass** mindestens gewisse der Sendekriterien (50) Daten angeben, die in der Informationsdatenbank (3) nur abgelegt werden, wenn mindestens ein Benutzer diese Daten ausgewählt hat.

41. Datenverbreitungssystem gemäss einem der Ansprüche 21 bis 40, **dadurch gekennzeichnet, dass** es ausserdem ein Billingsystem (6) umfasst, um die Aussendung von Informationen an den Benutzer zu verrechnen.

## Claims

1. Method for broadcasting addressed data to a multiplicity of users (9), in which method at least one information data base (3) is set up that contains the data intended to be sent through a broadcast channel, in which method transmission criteria (50) are stored, at least certain transmission criteria containing an address of a user, or a user group, as well as an indication about the data from the information data base (3, 3') which have to be transmitted to this user or user group, and in which method the data to be transmitted are automatically selected according to the stored transmission criteria, **characterised in that**
the filed data are obtained from a multiplicity of external information suppliers (1);
an indication about at least one broadcasting channel, selected from among different broadcasting channels, via which the filed data are to be transmitted, is stored with the transmission criteria; and
the automatically selected data are transmitted through the selected broadcasting channel (8) to the indicated user (9) or to the indicated user group.

2. Method according to the preceding claim, **characterised in that** at least certain selected data are transmitted as messages through a cellular digital mobile radio network (8).

3. Method according to one of the preceding claims, **characterised in that** at least certain selected data are transmitted as messages for paging systems.

4. Method according to one of the preceding claims, **characterised in that** at least certain selected data are transmitted through the Internet as addressed messages, for example as e-mail.

5. Method according to one of the preceding claims, **characterised in that** at least certain selected data are transmitted through a teletext channel as a teletext page.

6. Method according to one of the preceding claims, **characterised in that** at least certain selected data are transmitted through a public telecommunications network as fax.

7. Method according to one of the preceding claims, **characterised in that** at least certain selected data are shown on display panels.

8. Method according to one of the preceding claims, **characterised in that** at least certain selected data are multimedia data.

9. Method according to one of the preceding claims, **characterised in that** at least certain of the users administrate transmission criteria (50) through at least one telecommunications system (8, 14).

10. Method according to the preceding claim, **characterised in that** at least certain of the users administrate transmission criteria (50) through the Internet (11).

11. Method according to one of the claims 9 to 10, **characterised in that** at least certain of the users administrate transmission criteria (50) with special messages through a mobile radio network (8).

12. Method according to one of the claims 9 to 11, **characterised in that** at least certain of the users administrate transmission criteria (50) with standardised order codes through a mobile radio network (8), the identity of the users being automatically established with a user data base (131) in the mobile radio network.

13. Method according to one of the preceding claims, **characterised in that** the transmission criteria comprise at least one category of desired information.

14. Method according to one of the preceding claims, **characterised in that** at least certain of the transmission criteria comprise at least one data service.

15. Method according to one of the preceding claims, **characterised in that** at least certain of the transmission criteria comprise a standardised set of various data from different information providers (1).

16. Method according to one of the preceding claims, **characterised in that** at least certain of the transmission criteria comprise transmission time criteria.

17. Method according to one of the preceding claims, **characterised in that** at least certain of the transmission criteria comprise transmission periodicity criteria.

18. Method according to one of the preceding claims, **characterised in that** at least certain of the transmission criteria comprise event criteria.

19. Method according to one of the preceding claims, **characterised in that** at least certain of the transmission criteria indicate certain data which are filed in the information data base (3) only if at least one user has selected these data.

20. Method according to one of the preceding claims, **characterised in that** the transmission of data to the user is billed with a billing system.

21. Data broadcasting system (17) for the broadcasting of addressed data to a multiplicity of users (9) which data broadcasting system (17) contains at least one information data base (3) in which data are able to be filed that are intended to be transmitted through a broadcasting channel (8), which data broadcasting system (17) contains a storage area (50) in which storage area (50) transmission criteria for each user (9) or each user group are able to be filed, at least certain transmission criteria containing an address of a user or a user group as well as an indication about the data from the information data base (3, 3') which have to be transmitted to this user or this user group, and which data broadcasting system (17) comprises an information dispatcher (5) for automatic selection of data from the information data base (3, 3'), which data fulfil the desired transmission criteria of at least one user (9), **characterised in that**
the data broadcasting system (17) is set up such that the able to be filed data from a multiplicity of information suppliers (1) are transmitted through at least one communication channel (2) in the information data base (3, 3'),
the transmission criteria comprise an indication about at least one broadcasting channel selected from among different broadcasting channels (8, 8', 8") through which the data from the information data base are to be transmitted, and
the data broadcasting system (17) comprises at least one output driver (7) for transmission of selected data through the selected broadcasting channel (8) to the respective user (9) or user group.

22. Data broadcasting system according to the preceding claim, **characterised in that** it comprises a plurality of output drivers (7) for transmission of data to the user (9) through a corresponding multiplicity of transmission channels (8) in accordance with the filed transmission criteria.

23. Data broadcasting system according to one of the claims 21 or 22, **characterised in that** the said output drivers (7) comprise at least one driver for a cellular digital mobile radio network (8) to transmit selected data as messages to mobile radio telephones (9).

24. Data broadcasting system according to one of the claims 21 to 23, **characterised in that** the said output drivers (7) comprise at least one driver for a pager network to transmit selected information as pager messages to pager terminals.

25. Data broadcasting system according to one of the claims 21 to 24, **characterised in that** the said output drivers (7) comprise at least one driver for the Internet, to transmit selected information as e-mail.

26. Data broadcasting system according to one of the claims 21 to 25, **characterised in that** the said output drivers (7) comprise at least one driver for a DAB network to transmit selected information as a radio program-accompanying service.

27. Data broadcasting system according to one of the claims 21 to 26, **characterised in that** the said output drivers (7) comprise at least one driver for a teletext system to transmit selected information as teletext page.

28. Data broadcasting system according to one of the claims 21 to 27, **characterised in that** the said output drivers comprise at least one fax driver (7') to transmit selected information as a fax.

29. Data broadcasting system according to one of the claims 21 to 28, **characterised in that** the said output drivers comprise at least one driver for display panels to display selected information on display panels.

30. Data broadcasting system according to one of the claims 21 to 29, **characterised in that** it is set up such that the transmission criteria in the said storage area (50) are able to be administered by the users through at least one telecommunications system (8, 14).

31. Data broadcasting system according to the preceding claim, **characterised in that** it is set up such that the transmission criteria in the said storage area (50) are able to be administered by the users with the aid of the Internet (11).

32. Data broadcasting system according to one of the claims 30 or 31, **characterised in that** it is set up such that the transmission criteria in the said storage area (50) are able to be administered by the users with special messages through a mobile radio network (8).

33. Data broadcasting system according to one of the claims 31 to 32, **characterised in that** it is set up such that the transmission criteria in the said storage area (50) are able to be administrated by the users with standardised order codes through a mobile radio network (8), the identity of the users being automatically established in the mobile radio network with a user data base (131).

34. Data broadcasting system according to one of the claims 21 to 33, **characterised in that** the transmission criteria (50) comprise at least one data type.

35. Data broadcasting system according to one of the claims 21 to 34, **characterised in that** at least certain of the transmission criteria (50) indicate at least one data service.

36. Data broadcasting system according to one of the claims 21 to 35, **characterised in that** at least certain of the transmission criteria comprise a standardised set of various data from different information suppliers (1).

37. Data broadcasting system according to one of the claims 21 to 36, **characterised in that** at least certain of the transmission criteria comprise transmission time criteria.

38. Data broadcasting system according to one of the claims 21 to 37, **characterised in that** at least certain of the transmission criteria comprise transmission periodicity criteria.

39. Data broadcasting system according to one of the claims 21 to 38, **characterised in that** at least certain of the transmission criteria comprise event criteria.

40. Data broadcasting system according to one of the claims 21 to 39, **characterised in that** at least certain of the transmission criteria (50) indicate data which are filed in the information data base (3) only if at least one user has selected these data.

41. Data broadcasting system according to one of the claims 21 to 40, **characterised in that** it further comprises a billing system (6) to bill the transmission of information to the user.

## Revendications

1. Procédé de diffusion de données adressées, envoyées à un grand nombre d'utilisateurs (9), dans lequel au moins une banque de données d'informations (3) est créée et contient des données qui sont destinées à être expédiées par un canal de diffusion, procédé dans lequel des critères d'expédition (50) sont mis en mémoire, au moins certains critères d'expédition comportant une adresse d'un utilisateur ou d'un groupe d'utilisateurs ainsi qu'une indication sur les données provenant de la banque de données d'informations (3, 3') qui doivent être envoyées à cet utilisateur ou à ce groupe d'utilisateurs, procédé dans lequel les données à expédier sont sélectionnées automati-quement conformément aux critères d'expédition mis en mémoire, **caractérisé en ce que** les données déposées sont obtenues auprès d'un grand nombre de sources extérieures de renseignements (1), **en ce que**, avec les critères d'expédition, est mise en mémoire une indication portant sur au moins un canal de diffusion choisi parmi divers canaux de diffusion, les données déposées devant être envoyées par ce canal, et **en ce que** les données sélectionnées automatiquement sont envoyées, par le canal de diffusion choisi (8), à l'utilisateur (9) indiqué ou au groupe d'utilisateurs indiqué.

2. Procédé selon la revendication précédente, **caractérisé en ce qu'**au moins certaines données sélectionnées sont expédiées, en tant que messages, au moyen d'un réseau de téléphonie mobile numérique cellulaire (8).

3. Procédé selon l'une des revendications précédentes, **caractérisé en ce qu'**au moins certaines données sélectionnées sont envoyées, en tant que messages, pour des systèmes d'appel de personnes.

4. Procédé selon l'une des revendications précédentes, **caractérisé en ce qu'**au moins certaines données sélectionnées sont envoyées, sous la forme de messages adressés, par exemple comme e-mails, par Internet.

5. Procédé selon l'une des revendications précédentes, **caractérisé en ce qu'**au moins certaines données sélectionnées sont envoyées, sous la forme d'une page de télétexte, par un canal de télétexte.

6. Procédé selon l'une des revendications précédentes, **caractérisé en ce qu'**au moins certaines données sélectionnées sont envoyées, sous la forme de télécopies (ou fax), au moyen d'un réseau de télécommunications public.

7. Procédé selon l'une des revendications précédentes, **caractérisé en ce qu'**au moins certaines données sélectionnées sont affichées sur des panneaux d'affichage.

8. Procédé selon l'une des revendications précédentes, **caractérisé en ce qu'**au moins certaines données sélectionnées sont des données multimédia.

9. Procédé selon l'une des revendications précédentes, **caractérisé en ce qu'**au moins certains des utilisateurs gèrent des critères d'expédition (50) par l'intermédiaire d'au moins un système de télécommunications (8, 14).

10. Procédé selon la revendication précédente, **caractérisé en ce qu'**au moins certains des utilisateurs gèrent des critères d'expédition (50) par l'intermédiaire d'lnternet (11).

11. Procédé selon la revendication 9 ou 10, **caractérisé en ce qu'**au moins certains des utilisateurs gèrent des critères d'expédition (50) au moyen de messages spéciaux, par l'intermédiaire d'un réseau de téléphonie mobile (8).

12. Procédé selon l'une des revendications 9 à 11, **caractérisé en ce qu'**au moins certains des utilisateurs gèrent des critères d'expédition (50) au moyen de codes d'ordres normalisés, par l'intermédiaire d'un réseau de téléphonie mobile (8), l'identité des utilisateurs étant déterminée automatiquement au moyen d'une banque de données des utilisateurs (131), dans le réseau de téléphonie mobile.

13. Procédé selon l'une des revendications précédentes, **caractérisé en ce que** les critères d'expédition comprennent au moins une catégorie de renseignements désirés.

14. Procédé selon l'une des revendications précédentes, **caractérisé en ce qu'**au moins certains des critères d'expédition comprennent au moins un service de données.

15. Procédé selon l'une des revendications précédentes, **caractérisé en ce qu'**au moins certains des critères d'expédition comprennent un ensemble normalisé de données diverses provenant de différentes sources de renseignements (1).

16. Procédé selon l'une des revendications précédentes, **caractérisé en ce qu'**au moins certains des critères d'expédition comprennent des critères d'émission.

17. Procédé selon l'une des revendications précédentes, **caractérisé en ce qu'**au moins certains des critères d'expédition comprennent des critères de périodicité d'émission.

18. Procédé selon l'une des revendications précédentes, **caractérisé en ce qu'**au moins certains des critères d'expédition comprennent des critères d'évènements.

19. Procédé selon l'une des revendications précédentes, **caractérisé en ce qu'**au moins certains des critères d'expédition indiquent certaines données qui ne sont déposées dans la banque de données d'information (3) que si au moins un utilisateur a choisi ces données.

20. Procédé selon l'une des revendications précédentes, **caractérisé en ce que** l'envoi de données à l'utilisateur est imputé au moyen d'un système d'imputation.

21. Système de diffusion de données (17) destiné à la diffusion de données adressées, envoyées à un grand nombre d'utilisateurs (9), ce système de diffusion de données (17) comportant au moins une banque de données d'informations (3) dans laquelle peuvent être déposées des données qui sont destinées à être envoyées au moyen d'un canal de diffusion (8), ce système de diffusion de données (17) comportant aussi une zone de mémoire (50) dans laquelle peuvent être déposés des critères d'expédition pour chaque utilisateur (9) ou chaque groupe d'utilisateurs, au moins certains critères d'expédition comportànt une adresse d'un utilisateur ou d'un groupe d'utilisateurs ainsi qu'une indication sur les données provenant de la banque de données d'informations (3, 3') et qui doivent être envoyées à cet utilisateur ou à ce groupe d'utilisateurs, et ce système de diffusion de données (17) comprenant un répartiteur d'informations (5) servant à la sélection automatique de données de la banque de données d'informations (3; 3'), ces données satisfaisant aux critères d'expédition désirés d'au moins un utilisateur (9), **caractérisé en ce que** le système de diffusion de données (17) est conçu de telle manière que les données pouvant être déposées, provenant d'un grand nombre de sources de renseignements (1), peuvent être transmises, par au moins un canal de communications (2), à la banque de données d'informations (3, 3'), **en ce que** les critères d'expédition comprennent une indication sur au moins un canal de diffusion (8) choisi parmi divers canaux de diffusion (8, 8', 8"), canal par lequel doivent être envoyées les données provenant de la banque de données d'informations (3, 3'), et **en ce que** le système de diffusion de données (17) comprend au moins un pilote de sortie (7) pour envoyer les données sélectionnées, au moyen du canal de diffusion (8) choisi, aux utilisateurs (9) considérés ou au groupe d'utilisateurs considéré.

22. Système de diffusion de données selon la revendication précédente, **caractérisé en ce qu'**il comprend plusieurs pilotes de sortie (7) pour l'envoi de données à l'utilisateur (9) au moyen d'un grand nombre correspondant de canaux de diffusion (8), conformément aux critères d'expédition déposés.

23. Système de diffusion de données selon la revendication 21 ou 22, **caractérisé en ce que** les pilotes de sortie (7) mentionnés comprennent au moins un pilote pour un réseau numérique cellulaire de téléphonie mobile (8) pour envoyer des données sélectionnées, sous la forme de messages, à des téléphones mobiles (9).

24. Système de diffusion de données selon l'une des revendications 21 à 23, **caractérisé en ce que** les pilotes de sortie (7) mentionnés comprennent au moins un pilote pour un réseau de recherche de personnes, pour envoyer des renseignements sélectionnés, sous la forme de messages pour récepteurs d'appel de personnes envoyés à des terminaux d'appel de personnes.

25. Système de diffusion de données selon l'une des revendications 21 à 24, **caractérisé en ce que** les pilotes de sortie (7) mentionnés comprennent au moins un pilote pour Internet, afin d'envoyer des renseignements sélectionnés sous la forme d'e-mails.

26. Système de diffusion de données selon l'une des revendications 21 à 25, **caractérisé en ce que** les pilotes de sortie (7) mentionnés comprennent au moins un pilote pour un réseau DAB, afin d'envoyer des renseignements sélctionnés sous la forme d'un service accompagnant un programme radiophonique.

27. Système de diffusion de données selon l'une des revendications 21 à 26, **caractérisé en ce que** les pilotes de sortie (7) mentionnés comprennent au moins un pilote pour un système de télétexte, afin d'envoyer des renseignements sélectionnés sous la forme d'une page de télétexte.

28. Système de diffusion de données selon l'une des revendications 21 à 27, **caractérisé en ce que** les pilotes de sortie mentionnés comprennent au moins un gestionnaire de télécopie (7'), afin d'envoyer des renseignements sélectionnés sous la forme d'une télécopie.

29. Système de diffusion de données selon l'une des revendications 21 à 28, **caractérisé en ce que** les pilotes de sortie (7) mentionnés comprennent au moins un gestionnaire pour panneaux d'affichage, afin d'afficher des renseignements sélectionnés sur des panneaux d'affichage.

30. Système de diffusion de données selon l'une des revendications 21 à 29, **caractérisé en ce qu'**il est conçu de telle manière que les critères d'expédition dans la zone de mémoire mentionnée (50) puissent être gérés par les utilisateurs au moyen d'au moins un système de télécommunications (8, 14).

31. Système de diffusion de données selon la revendication précédente, **caractérisé en ce qu'**il est conçu de telle manière que les critères d'expédition dans la zone de mémoire mentionnée (50) puissent être gérés par les utilisateurs au moyen d'lnternet (11).

32. Système de diffusion de données selon la revendication 30 ou 31, **caractérisé en ce qu'**il est conçu de telle manière que les critères d'expédition dans la zone de mémoire mentionnée (50) puissent être gérés par les utilisateurs au moyen de messages spéciaux, grâce à un réseau de téléphonie mobile (8).

33. Système de diffusion de données selon la revendication 31 ou 32, **caractérisé en ce qu'**il est conçu de telle manière que les critères d'expédition dans la zone de mémoire mentionnée (50) puissent être gérés par les utilisateurs au moyen de codes d'ordres normalisés, grâce à un réseau de téléphonie mobile (8), l'identité des utilisateurs étant déterminée automatiquement, dans le réseau de téléphonie mobile, au moyen d'une banque de données des utilisateurs (131).

34. Système de diffusion de données selon l'une des revendications 21 à 33, **caractérisé en ce que** les critères d'expédition (50) comprennent au moins le type de données.

35. Système de diffusion de données selon l'une des revendications 21 à 34, **caractérisé en ce qu'**au moins certains des critères d'expédition (50) indiquent au moins un service de données.

36. Système de diffusion de données selon l'une des revendications 21 à 35, **caractérisé en ce qu'**au moins certains des critères d'expédition comprennent un ensemble normalisé de données diverses provenant de différentes sources de renseignements (1).

37. Système de diffusion de données selon l'une des revendications 21 à 36, **caractérisé en ce qu'**au moins certains des critères d'expédition comprennent des critères d'émission.

38. Système de diffusion de données selon l'une des revendications 21 à 37, **caractérisé en ce qu'**au moins certains des critères d'expédition comprennent des critères de périodicité d'émission.

39. Système de diffusion de données selon l'une des revendications 21 à 38, **caractérisé en ce qu'**au moins certains des critères d'expédition comprennent des critères d'évènements.

40. Système de diffusion de données selon l'une des revendications 21 à 39, **caractérisé en ce qu'**au moins certains des critères d'expédition (50) indiquent des données qui ne sont déposées dans la banque de données d'informations (3) que si au moins un utilisateur a choisi ces données.

41. Système de diffusion de données selon l'une des revendications 21 à 40, **caractérisé en ce qu'**il comprend en outre un système d'imputation (6) servant à imputer l'expédition de renseignements à l'utilisateur.
